(19) Europäisches Patentamt
European Patent Office
Office européen des brevets

(11) EP 2 242 275 A1

(12) **EUROPEAN PATENT APPLICATION**

(43) Date of publication:
20.10.2010 Bulletin 2010/42

(51) Int Cl.:
*H04N 7/26* (2006.01)          *H04N 7/34* (2006.01)

(21) Application number: 10159213.7

(22) Date of filing: 07.04.2010

(84) Designated Contracting States:
AT BE BG CH CY CZ DE DK EE ES FI FR GB GR
HR HU IE IS IT LI LT LU LV MC MK MT NL NO PL
PT RO SE SI SK SM TR
Designated Extension States:
AL BA ME RS

(30) Priority: 14.04.2009 JP 2009097825

(71) Applicant: Sony Corporation
Tokyo 108-0075 (JP)

(72) Inventors:
• KOTAKA, Naohiko
TOKYO Tokyo 108-0075 (JP)
• NAKAZATO, Munehiro
TOKYO Tokyo 108-0075 (JP)

(74) Representative: Körber, Martin Hans
Mitscherlich & Partner
Patent- und Rechtsanwälte
Sonnenstraße 33
80331 München (DE)

(54) **Image encoding apparatus, image encoding method, and computer program**

(57)      An image encoding apparatus includes: a luminance component intra-prediction unit which divides an encoding target image into first blocks e.g. macroblocks of (M×M) pixels and determines an intra-prediction mode of a luminance component for each of encoding target blocks e.g. subblocks of the first block; and a color difference component intra-prediction unit which calculates a weight of a prediction direction by using the intra-prediction mode of the luminance component in the first block and determines an intra-prediction mode of a color difference component of the first block from the weight of the prediction direction.

FIG. 2

EP 2 242 275 A1

**Description**

BACKGROUND OF THE INVENTION

1. Field of the Invention

The present invention relates to an image encoding apparatus, an image encoding method, and a computer program, and more particularly, to a technique capable of determining an intra-prediction mode easily.

2. Description of the Related Art

In the past, a technique capable of transmitting and accumulating image signals effectively by using the redundancy of the image signal efficiently was developed, when a video for broadcast is transmitted and recorded, for example. This technique executes data compression of an image signal by motion compensation and orthogonal transform such as discrete cosine transform in conformity with the MPEG (Moving Picture Experts Group) or the like.
For example, the MPEG2 (ISO/IEC 13818-2) is a method that is defined as a general image encoding method. This method is defined so as to correspond to both an interlacing scanning method and a progressive scanning method and so as to correspond to both a standard resolution image and a high-definition image. The MPEG2 is widely used in various applications.
A standard encoding method ensuring a higher encoding efficiency than that of the MPEG2 has been developed as the Joint Model of Enhanced-Compression Video Coding method and standardized as the H.264/MPEG-4 AVC (ITU-T Rec.H.264 ISO/IEC 14496-10 AVC).
As such a kind of technique, a prediction mode is set appropriately in terms of the encoding efficiency for an intra-prediction operation of H.264/MPEG-4 AVC (hereinafter, referred to as "H.264/AVC") in Japanese Unexamined Patent Application Publication No. 2006-5438, for example.

SUMMARY OF THE INVENTION

In the intra-prediction operation, index data serving as an index of predicting an encoding amount is calculated for block data of a processing target in each of the plural intra-prediction modes, and a mode with the smallest index data is determined as the intra-prediction mode of the processing target. In the calculation of the index data, when the index data is calculated for each of a luminance component and a color difference component from the index data with a large processing amount to determine the intra-prediction mode, a problem may arise in that bandwidth in signal processing increases or a memory amount used to calculate the index data increases.
It is desirable to provide an image encoding apparatus, an image encoding method, and a computer program capable of determining an intra-prediction mode easily.
According to an embodiment of the invention, there is provided an image encoding apparatus including: a luminance component intra-prediction unit which divides an encoding target image into first blocks of (M×M) pixels and determines an intra-prediction mode of a luminance component for each of encoding target blocks of the first block; and a color difference component intra-prediction unit which calculates a weight of a prediction direction by using the intra-prediction mode of the luminance component in the first block and determines an intra-prediction mode of a color difference component of the first block from the weight of the prediction direction.
According to the embodiment of the invention, the encoding target image is divided into macroblocks, for example, the intra-prediction mode of the luminance component is determined for one encoding target block or each of the plural encoding target blocks provided in the macroblock. Moreover, the intra-prediction mode of the luminance component in the macroblock is allocated to the mode of each prediction direction, and the weight of the prediction direction is calculated from distribution of the first blocks of the allocated modes. For example, the frequency of modes of each prediction direction in the first block, or the frequency of modes, of which the prediction direction is vertical, in a region of the encoding target blocks located in the upper end of the first block, or the frequency of modes, of which the prediction direction is horizontal, in a region of the encoding target blocks located in the left end of the first block is considered as the weight of the prediction direction. Accordingly, the intra-prediction mode of the color difference component is determined on the basis of the weight of the prediction direction. Moreover, the weight corresponding to the continuous number of allocated modes, of which the prediction direction is vertical, from the upper end of the first block and the weight corresponding to the continuous number of allocated modes, of which the prediction direction is horizontal, from the left end of the first block are added to the weight of the prediction direction. The luminance component intra-prediction unit calculates a cost value of each intra-prediction mode in each encoding target block, and determines the mode with the smallest cost value as the intra-prediction mode. The weight corresponding to the cost value of the intra-prediction mode of the luminance component is added to the weight of the prediction direction.

According to another embodiment of the invention, there is provided an image encoding method including the steps of: dividing an encoding target image into first blocks of (M×M) pixels and to determine an intra-prediction mode of a luminance component for each of encoding target blocks of the first block by a luminance component intra-prediction unit; and calculating a weight of a prediction direction by using the intra-prediction mode of the luminance component in the first block and to determine an intra-prediction mode of a color difference component of the first block from the weight of the prediction direction by a color difference component intra-prediction unit.

According to still another embodiment of the invention, there is provided a computer program causing a computer to execute: a function of dividing an encoding target image into first blocks of (M×M) pixels and determining an intra-prediction mode of a luminance component for each of encoding target blocks of the first block; and a function of calculating a weight of a prediction direction by using the intra-prediction mode of the luminance component in the first block and determining an intra-prediction mode of a color difference component of the first block from the weight of the prediction direction.

The computer program according to the embodiment of the invention is a computer program that may be supplied to a general computer system, which executes various program codes, in a computer readable format by a storage medium such as an optical disk, a magnetic disk, or a semiconductor memory, or a communication medium such as a network. By supplying the program in a computer readable format, a process is executed on the computer system in accordance with the program.

According to the embodiment of the invention, the encoding target image is divided into the first blocks with the encoding target images of (M×M) pixels, and the intra-prediction mode of the luminance component is determined for each of the plural encoding target blocks of the first block. Moreover, the weight of the prediction direction is calculated using the intra-prediction mode of the luminance component in the first block. Then, the intra-prediction mode of the color difference component for the first block is determined from the weight of the prediction direction. Therefore, it is not necessary to calculate a cost value used to determine the intra-prediction mode of the color difference component, and the intra-prediction mode of the color difference component can be determined easily with a simple configuration.

BRIEF DESCRIPTION OF THE DRAWINGS

Fig. 1 is a diagram illustrating the configuration of an image encoding apparatus.
Fig. 2 is a diagram illustrating the configuration of an intra-prediction unit.
Fig. 3 is a diagram illustrating a positional relationship with pixel signals adjacent to an encoding target block.
Figs. 4A to 4I are diagrams illustrating a 4 by 4 intra-prediction mode.
Fig. 5 is a flowchart illustrating the intra-prediction operation on one encoding target block of a luminance component.
Figs. 6A to 6C are diagrams illustrating a weight calculating operation executed by using preset additional values in accordance with the prediction modes of the luminance signal.
Fig. 7 is a flowchart illustrating the weight calculating operation.
Fig. 8 is a flowchart illustrating a prediction mode determining operation.
Figs. 9A and 9B are diagrams illustrating a different method (1) of calculating a weight and determining a prediction mode.
Figs. 10A and 10B are diagrams illustrating a different method (2) of calculating the weight and determining the prediction mode.
Figs. 11A and 11B are diagrams illustrating a different method (3) of calculating the weight and determining the prediction mode.
Figs. 12A and 12B are diagrams illustrating a different method (4) of calculating the weight and determining the prediction mode.
Figs. 13A and 13B are diagrams illustrating a different method (5) of calculating the weight and determining the prediction mode.
Fig. 14 is a diagram illustrating the configuration of a computer.

DESCRIPTION OF THE PREFERRED EMBODIMENTS

Hereinafter, a preferred embodiment of the invention will be described in the following order.

1. Configuration of Image Processing Apparatus
2. Optimum Mode Selecting Operation in Image Processing Apparatus
3. Configuration of Intra-Prediction Unit
4. Intra-Prediction Mode

5. Luminance Intra-Prediction Operation

6. Color Difference Intra-Prediction Operation

7. Different Method (1) of Calculating Weight and Determining Intra-Prediction Mode

8. Different Method (2) of Calculating Weight and Determining Intra-Prediction Mode

9. Different Method (3) of Calculating Weight and Determining Intra-Prediction Mode

10. Different Method (4) of Calculating Weight and Determining Intra-Prediction Mode

11. Different Method (5) of Calculating Weight and Determining Intra-Prediction Mode

12. Configuration in Case of Executing Image Encoding Operation by Software

1. Configuration of Image Processing Apparatus

An image encoding apparatus according to an embodiment of the invention divides an encoding target image into first blocks of (M×M) pixels and determines an intra-prediction mode of a luminance component for each encoding target block provided in the first block. Moreover, the image encoding apparatus determines an intra-prediction mode of a color difference component for each first block by using the intra-prediction mode of the luminance component in the first block.

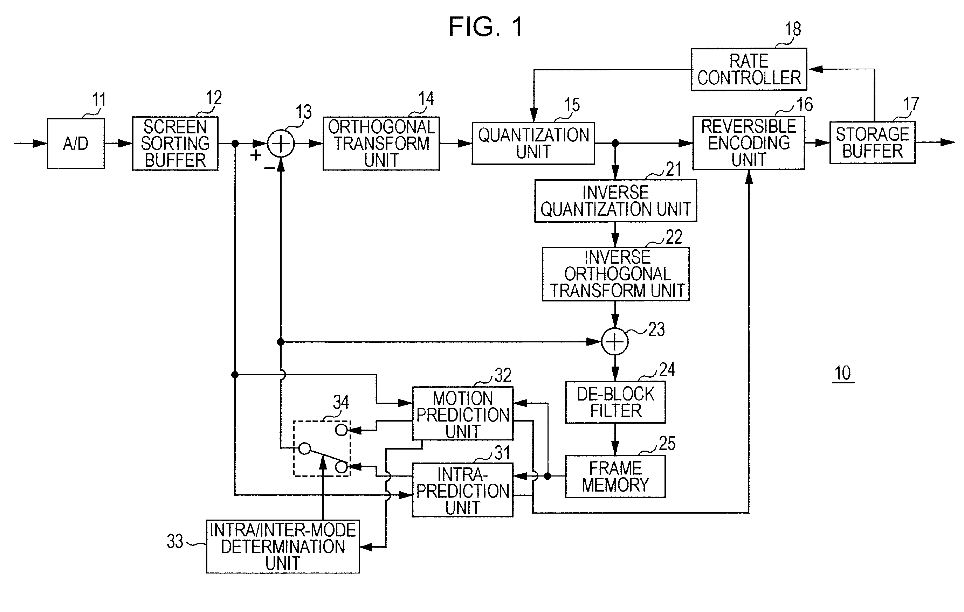

Fig. 1 is a diagram illustrating the configuration of the image encoding apparatus. The image encoding apparatus 10 includes an analog/digital converter (A/D converter) 11, a screen sorting buffer 12, a subtraction unit 13, an orthogonal transform unit 14, a quantization unit 15, a reversible encoding unit 16, a storage buffer 17, and a rate controller 18. The image encoding apparatus 10 also includes an inverse quantization unit 21, an inverse orthogonal transform unit 22, an addition unit 23, a de-block filter 24, a frame memory 25, an intra-prediction unit 31, a motion prediction unit 32, an intra/ inter mode determination unit 33, and a selector 34.

The A/D converter 11 converts an analog image signal into a digital image signal to output the digital image signal to the screen sorting buffer 12.

The screen sorting buffer 12 sorts frames in accordance with the image signal output from the A/D converter 11. The screen sorting buffer 12 sorts the frames in accordance with a GOP (Group Of Pictures) structure associated with an encoding operation and outputs an image signal subjected to the sorting to the subtraction 13, the intra-prediction unit 31, and the motion prediction unit 32.

The image signal output from the screen sorting buffer 12 and a prediction value selected by the selector 34, which is described below, are supplied to the subtraction unit 13. The selector 34 selects the prediction value generated by the intra-prediction unit 31, which is described in an intra-prediction operation. Accordingly, the subtraction unit 13 generates and outputs a difference signal between the image signal output from the screen sorting buffer 12 and the prediction value generated by the intra-prediction unit 31 in the intra-encoding operation. The selector 34 selects the prediction value generated in the motion prediction unit 32, which is described in an inter-prediction operation. Accordingly, the subtraction unit 13 generates and outputs a difference signal between the image signal output from the screen sorting buffer 12 and the prediction value generated by motion prediction unit 32 in the inter-encoding operation.

The orthogonal transform unit 14 executes an orthogonal transform process, such as a discrete cosine transform (DCT) or Karhunen-Loeve transform, on the difference signal output from the subtraction unit 13. The orthogonal transform unit 14 outputs a transform coefficient signal obtained by executing the orthogonal transform process to the quantization unit 15.

The transform coefficient signal output from the orthogonal transform unit 14 and a rate control signal output from the rate controller 18, which is described below, are supplied to the quantization unit 15. The quantization unit 15 executes quantization of the transform coefficient signal and outputs the quantization signal to the reversible encoding unit 16 and the inverse quantization unit 21. The quantization unit 15 converts a quantization parameter (for example, a quantization scale) on the basis of the rate control signal from the rate controller 18 to change a bit rate of the quantization signal.

The quantization signal output from the quantization unit 15 and encoding information output from the intra-prediction unit 31 and the motion prediction unit 32, which is described below, are supplied to the reversible encoding unit 16. The reversible encoding unit 16 executes a reversible encoding operation on the quantization signal by a variable length encoding or arithmetic encoding operation, for example. The reversible encoding unit 16 outputs the encoding information output from the intra-prediction unit 31 or the motion prediction unit 32 to the storage buffer 17 by adding the encoding information as header information to the output signal subjected to the reversible encoding operation.

The storage buffer 17 stores the output signal from the reversible encoding unit 16. The storage buffer 17 outputs the stored output signal at a transmission rate that is appropriate in a transmission line.

The rate controller 18 detects a free space of the storage buffer 17 and generates a rate control signal depending on the free space to output the rate control signal to the quantization unit 15. The rate controller 18 acquires information indicating the free space from the storage buffer 17, for example. The rate controller 18 decreases the bit rate of the quantization signal in accordance with the rate control signal, when the free space is reduced. The rate controller 18 increases the bit rate of the quantization signal in accordance with the rate control signal, when the free space of the storage buffer 17 is sufficiently large.

The inverse quantization unit 21 executes an inverse quantization operation of the quantization signal supplied from the quantization unit 15. The inverse quantization unit 21 outputs the transform coefficient signal obtained by the inverse quantization operation to the inverse orthogonal transform unit 22.

The inverse orthogonal transform unit 22 executes an inverse orthogonal transform operation of the transform coefficient signal supplied from the inverse quantization unit 21. The inverse orthogonal transform unit 22 generates the difference signal to be input to the orthogonal transform unit 14 and outputs the generated difference signal to the addition unit 23.

The difference signal from the inverse orthogonal transform unit 22 and a prediction value from the selector 34 are supplied to the addition unit 23. The addition unit 23 adds the prediction value and the difference signal to generate a decoding image signal and output the decoding image signal to the de-block filter 24.

The de-block filter 24 is a filter that reduces block distortion occurring when an image is encoded. The de-block filter 24 executes a filter operation to remove the block distortion adaptively from the decoding image signal supplied from the addition unit 23 and outputs the decoding image signal subjected to the filter operation to the frame memory 25.

The frame memory 25 maintains the decoding image signal supplied from the de-block filter 24. That is, the frame memory 25 maintains an encoded image obtained by the encoding and the decoding operations.

The intra-prediction unit 31 determines the intra-prediction mode by using the decoding image signal stored in the frame memory 25 in the intra-encoding operation. When the encoding operation is executed with the intra-prediction, the prediction value is generated from the decoding image signal in the determined intra-prediction mode and is output to the selector 34. The intra-prediction unit 31 generates information regarding the encoding and outputs the information to the reversible encoding unit 16.

The motion prediction unit 32 detects a motion vector by using the decoding image signal stored in the frame memory 25 and the image signal output from the screen sorting buffer 12. An inter-prediction mode is determined by the detected motion vector by performing motion compensation by using the decoding image signal stored in the frame memory 25. When the encoding operation is executed by the inter-prediction, a prediction value is generated from the decoding image signal in the inter-prediction mode and is output to the selector 34. The motion prediction unit 32 generates information regarding the encoding operation and outputs the information to the reversible unit 16.

The intra/inter mode determination unit 33 compares the mode determined by the intra-prediction unit 31 to the mode determined by the motion prediction unit 32 to select a mode with a higher encoding efficiency. The intra/inter mode determination unit 33 controls the selector 34 depending on the selection result of the prediction mode and outputs a prediction value, which is generated by the intra-prediction unit 31 or the motion prediction unit 32 determining the selected prediction mode, to the subtraction unit 13.

Fig. 1 shows the configuration of the intra-prediction unit 31 in which the decoding image signal subjected to the filter operation by the de-block filter 24 is used. However, the intra-prediction operation may be executed using an image signal before the de-block filter 24 executes the filter operation.

In this way, the image encoding apparatus 10 generates the difference signal by the motion compensation associated with the inter-prediction and the difference signal by the intra-prediction. The image encoding apparatus 10 executes and outputs an orthogonal transform operation, a quantization operation, and a variable length encoding operation.

2. Optimum Mode Selecting Operation in Image Processing Apparatus

In the H.264/AVC, a high complexity mode and a low complexity mode are defined by the Joint Model (AVC reference encoding mode). The optimum mode is selected in accordance with this definition and the encoding operation is executed. The high complexity mode is a mode for multi-pass encoding and the low complexity mode a mode for single-pass encoding.

In the low complexity mode, a cost function representing an encoding efficiency is defined by Expression 1 and the most optimum prediction mode is detected using the cost function by comparing cost values calculated in each prediction mode.

$$\text{Cost(mode)} = \text{SA(T)D} + \text{SA(T)D0} \ldots (1)$$

An SA(T)D (Sum of Absolute Transformed Difference) is an error value between the original image and a prediction image. The absolute error sum of differences in pixels values between the original image and the prediction image is applied.

An SA(T)D0 is an offset value given in the error value SA(T)D. The SA(T)D is determined by a header bit and a cost which is a weight in mode determination. The SA(T)D represents a signal amount which is supplied in transmission of additive information such a motion vector. Specifically, an absolute value error sum SAD (Sum of Absolute Difference) is calculated for each encoding target block by Expression 2. A difference value between the original image and the prediction image in each prediction mode is applied.

$$SAD = \sum_{i=0}^{15} \sum_{j=0}^{15} \left| Org(i,j) - Pred(Mode,i,j) \right| \quad \cdots (2)$$

Instead of the absolute value error sum SAD calculated by Expression 2, SA(T)D (mode) may be used as a difference addition value calculated by Expression 3.

$$SA(T)D(mode) = \sum_{i=0}^{15} \sum_{j=0}^{15} \left| Hadamard(Org(i,j) - Pred(Mode,i,j)) \right| \quad \cdots (3)$$

Hadamard() represents a Hadamard transform operation obtained by multiplying a target matrix by the Hadamard transform matrix, as expressed in Expression 4.

$$Hadamard(A) = H^T A T \dots (4)$$

The Hadamard transform matrix is denoted as Expression 5. $H^T$ is a transposed matrix of the Hadamard transform matrix.

$$\mathbf{H} = \begin{bmatrix} 1 & 1 & 1 & 1 \\ 1 & -1 & 1 & -1 \\ 1 & 1 & -1 & -1 \\ 1 & -1 & -1 & 1 \end{bmatrix} \quad \cdots (5)$$

The offset value SA(T)D0 is denoted as Expression 6 in a forward prediction mode.

$$SA(T)D0 = QP0(QP) \cdot (2 \times code\_number\_of\_ref\_idx\_fwd$$

$$+ Bit\_to\_code\_MVDFW) \dots (6)$$

In this expression, QP0(QP) is a function that transforms a quantization parameter QP into a quantization scale. MVDFW is a motion vector associated with the forward prediction. Bit_to_code is an encoding amount on a bit stream associated with the motion vector.

The offset value SA(T)D0 is denoted as Expression 7 in a backward prediction mode. In this expression, MVDBW is a motion vector associated with the backward prediction.

$$SA(T)D0=QP0(QP)\times Bit\_to\_code\_MVDBW \ldots (7)$$

The offset value SA(T)D0 is also denoted as Expression 8 in a bi-directional prediction mode.

$$SA(T)D0=QP0(QP)\bullet(2\times code\_number\_of\_ref\_idx\_fwd$$

$$+Bit\_to\_code\_forward\_Blk\_size$$

$$+Bit\_to\_code\_backward\_Blk\_size$$

$$+Bit\_to\_code\_MVDFW$$

$$+Bit\_to\_code\_MVDBW) \ldots (8)$$

In this expression, "Bit_to_code_forward_Blk_size" and "Bit_to_code_backward_Blk_size" are encoding amounts on a bit stream necessary for transmission of information regarding a motion compensation block associated with the forward prediction and the backward prediction, respectively.
In a direct mode, the offset value SA(T)D0 is denoted as Expression 9.

$$SA(T)D0=-16\times QP0(QP) \ldots (9)$$

In an intra 4 by 4 prediction mode, the offset value SA(T)D0 is denoted as Expression 10.

$$SA(T)D0=24\times QP0(QP) \ldots (10)$$

This cost function is applied in search of the motion vector. As shown in Expression 11, a motion vector with the smallest cost value is detected.

$$Cost=SA(T)D+SA(T)D0$$

$$SA(T)D0=QP0(QP)\bullet(Bits\_to\_code\_vector$$

$$2\times code\_number\_of\_ref\_index\_fwd) \ldots (11)$$

Accordingly, when an optimum mode is detected in the low complexity mode, the intra-prediction unit 31 of the image encoding apparatus 10 calculates the cost values of all prediction modes in the intra-encoding operation by using the luminance signal. The prediction mode with the smallest cost value is determined as an intra-prediction mode. The intra-prediction unit 31 determines the intra-prediction mode of the color difference component by using the intra-prediction mode of the luminance component.

3. Configuration of Intra-Prediction Unit

Hereinafter, a first block is referred to as a macroblock of (16×16) pixels. The intra-prediction unit 31 provides an encoding target block of (4×4) pixels in the macroblock, determines the intra-prediction mode of the luminance component for each encoding target block, and determines the intra-prediction mode of the color difference component for each block of (16×16) pixels.

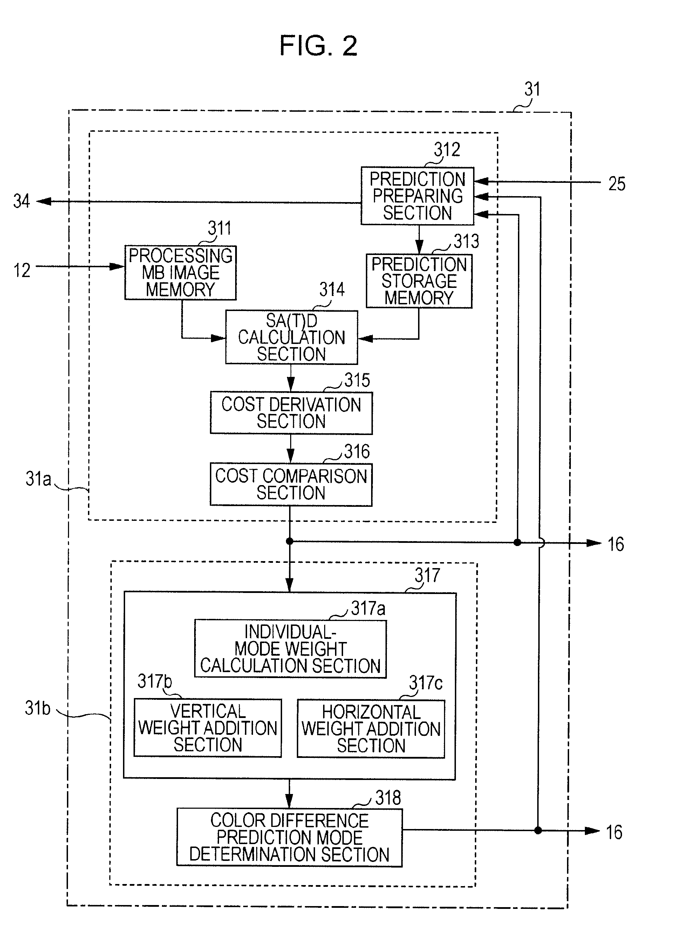

Fig. 2 is a diagram illustrating the configuration of the intra-prediction unit 31. The intra-prediction unit 31 includes a luminance component intra-prediction unit 31a determining the intra-prediction mode of the luminance component and a color difference component intra-prediction unit 31b determining the intra-prediction mode of the color difference component.

The luminance component intra-prediction unit 31a divides the encoding target image into macroblocks, for example, and determines the intra-prediction mode of the luminance component for each encoding target block in the macroblock. The color difference component intra-prediction unit 31b calculates the weight of a prediction direction by using the intra-prediction mode in the macroblock and determines the intra-prediction mode for the macroblock of the color difference component from the weight of the prediction direction.

The luminance component intra-prediction unit 31a includes a processing macroblock (MB) image memory 311, a prediction preparing section 312, a prediction storage memory 313, an SA(T)D calculation section 314, a cost derivation section 315, and a cost comparison section 316. The color difference component intra-prediction unit 31b includes a weight calculation section 317 and a color difference mode determination section 318.

The processing macroblock image memory 311 stores the image signal supplied from the screen sorting buffer 12. The processing macroblock image memory 311 outputs a luminance signal of the ($4 \times 4$) pixels, which is the encoding target block of the luminance signal, to the SA(T)D calculation section 314 from the image signal from the stored original image.

The prediction preparing section 312 generates the prediction of the luminance component for each prediction mode by using the decoding image signal stored in the frame memory 25 and outputs the generated prediction to the prediction storage memory 313. The prediction preparing section 312 generates the predictions of the luminance component and the color difference component in the intra-prediction mode determined by the cost comparison section 316 and the color difference prediction mode determination section 318 and outputs the generated image signal of the prediction to the selector 34.

The prediction storage memory 313 stores the image signals of the prediction of each intra-prediction mode generated by the prediction preparing section 312. The prediction storage memory 313 outputs the luminance signal of the encoded block with the same size at the same position as that of the encoding target block to the SA(T)D calculation section 314 from the image signal of the prediction.

The SA(T)D calculation section 314 calculates the SA(T)D and the SA(T)D0 by using the luminance signal of the encoding target block in the original image supplied from the processing macroblock image memory 311 and the luminance signal of the encoded block in the prediction supplied from the prediction storage memory 313. The SA(T)D calculation section 314 outputs the calculated SA(T)D and SA(T)D0 to the cost derivation section 315. The SA(T)D calculation section 314 calculates the SA(T)D and the SA(T)D0 for each block of the luminance signal in each prediction mode by using Expressions 2 and 10.

The cost derivation section 315 executes calculation of Expression 1 using the SA(T)D and the SA(T)D0 supplied from the SA(T)D calculation section 314, calculates the cost values, and outputs the cost values to the cost comparison section 316. The cost derivation section 315 calculates the cost value for each block of the luminance signal in each prediction mode.

The cost comparison section 316 compares the cost values calculated by the cost derivation section 315 in each intra-prediction mode. Then, the cost comparison section 316 determines the prediction mode with the smallest cost value as the most optimum intra-prediction mode. The cost comparison section 316 notifies the intra-prediction mode determined for each encoding target block of the luminance component to the prediction preparing section 312, the weight calculation section 317, and the reversible encoding unit 16.

The weight calculation section 317 allocates the intra-prediction mode of the luminance component to the mode of each prediction direction corresponding to the prediction mode of the color difference component and calculates a weight of the prediction direction from the distribution of the macroblock of the allocated mode. The weight calculation section 317 includes an individual-mode weight calculation section 317a, a vertical weight addition section 317b, and a horizontal weight addition section 317c.

The individual-mode weight calculation section 317a calculates a vertical weight and a horizontal weight of the color difference component depending on the frequency of the intra-prediction mode from the encoding target block of the luminance component corresponding to the encoding target block of the color difference component, that is, the distribution of the intra-prediction mode determined for each of the encoding target blocks of the luminance component in the macroblock.

The vertical weight addition section 317b executes addition of the vertical weight calculated by the individual-mode calculation section 317a depending on vertical block continuity from the intra-prediction mode determined for the encoding target block of the luminance component in the macroblock.

The horizontal weight addition section 317c executes addition of the horizontal weight calculated by the individual-mode calculation section 317a depending on horizontal block continuity from the intra-prediction mode determined for the encoding target block of the luminance component in the macroblock.

In this way, the weight calculation section 317 calculates the weight for each prediction direction of the color difference component and outputs the calculation weight to the color difference prediction mode determination section 318.

The color difference prediction mode determination section 318 determines the optimum intra-prediction mode of the color difference component by using the weight for each prediction direction supplied from the weight calculation section 317, and notifies the determined intra-prediction mode of the color difference component to the prediction preparing section 312 and the reversible encoding unit 16.

4. Intra-Prediction Mode

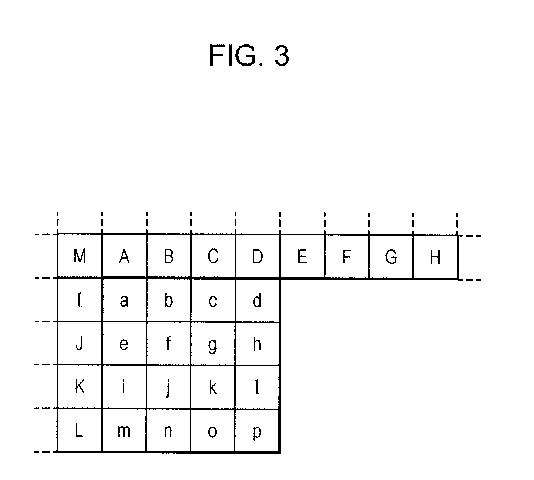

Fig. 3 is a diagram illustrating a positional relationship between pixel signals a to p belonging to the block of ($4 \times 4$) pixels, which is an intra-prediction processing target, and pixel signals A to M of a block adjacent on the left side, the upper left wide, the upper side, and the upper right side of a processing target block. It is determined that the pixel signals A to M are "unavailable" pixel signals, when the pixel signals A to M belong to a picture or a slice different from the processing target block.

Mode 0

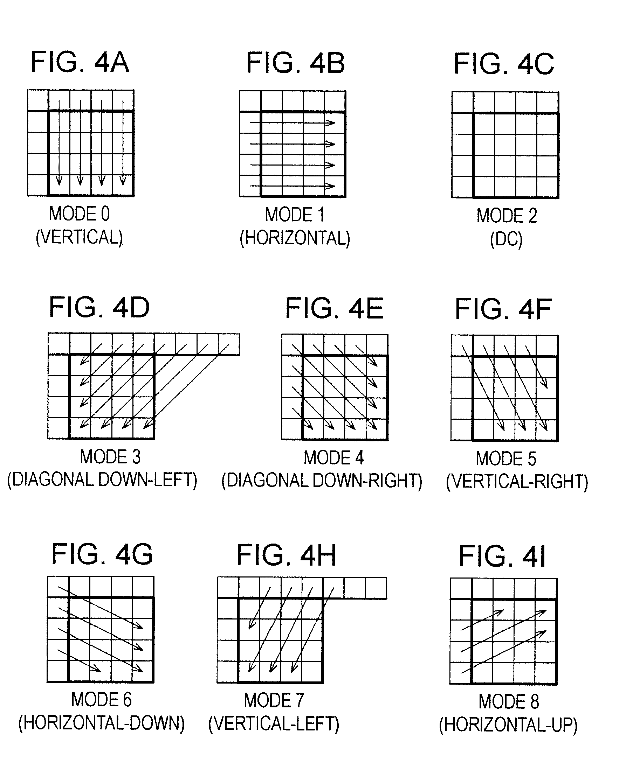

Mode 0 corresponds to "a vertical prediction". Mode 0 is applied, when the pixel signals A, B, C, and D shown in Fig. 3 are all "available". In this case, the prediction preparing section 312 generates a prediction value of the pixel signals a to p of the block by using the pixel signals A, B, C, and D, as in Fig. 4A and Expression 12. Figs. 4A to 4I are diagrams illustrating a 4 by 4 intra-prediction mode.

$$a,e,i,m: A$$

$$b,f,j,n: B \dots (12)$$

$$c,g,k,o: C$$

$$d,h,l,p: D$$

Mode 1

Mode 1 corresponds to "a horizontal prediction". Mode 1 is applied, when pixel signals I, J, K, and L shown in Fig. 3 are all "available". In this case, the prediction preparing section 312 generates prediction value of the pixel signals a to p of the block by using the pixel signals I, J, K, and L, as in Fig. 4B and Expression 13.

$$a,b,c,d: I$$

$$e,f,g,h: J \dots (13)$$

$$i,j,k,l: K$$

$$m,n,o,p: L$$

Mode 2

Mode 2 corresponds to "a DC prediction". In Mode 2, when the pixel signals A to D and I to L shown in Fig. 3 are all "available", the prediction preparing section 312 generates the prediction value of the pixel signals a to p of the block by using the pixel signals A to D and I to L, as in Fig. 4C and Expression 14.

$$(A+B+C+D+I+J+K+L+4) >> 3 \dots (14)$$

When the pixel signals A to D shown in Fig. 3 are all not "available", the prediction preparing section 312 generates the prediction value of the pixel signals a to p of the block by using the pixel signals A to D, as in Expression 15.

$$(I+J+K+L+2)>>2 \ldots (15)$$

When the pixel signals I to L shown in Fig. 3 are all not "available", the prediction preparing section 312 generates the prediction value of the pixel signals a to p of the block by using the pixel signals I to L, as in Expression 16.

$$(A+B+C+D+2)>>2 \ldots (16)$$

When the pixel signals A to D and I to L shown in Fig. 3 are all not "available", the prediction preparing section 312 uses the prediction value "128" of the pixel signals a to p of the block.

Mode 3

Mode 3 corresponds to "a diagonal down-left prediction". Mode 3 is applied, when the pixel signals A to D and I to M shown in Fig. 3 are all "available". In this case, the prediction preparing section 312 generates a prediction value of the pixel signals a to p of the block by using the pixel signals A to D and I to M, as in Fig. 4D and Expression 17.

$$
\begin{aligned}
a: &\quad (A+2B+C+2)>>2 \\
b,e: &\quad (B+2C+D+2)>>2 \\
c,f,i &\quad (C+2D+E+2)>>2 \\
d,g,j,m: &(D+2E+F+2)>>2 \ldots (17) \\
h,k,n: &\quad (E+2F+G+2)>>2 \\
l,o: &\quad (F+2G+H+2)>>2 \\
p: &\quad (G+3H+2)>>2
\end{aligned}
$$

Mode 4

Mode 4 corresponds to "a diagonal down-right prediction". Mode 4 is applied, when the pixel signals A to D and I to M shown in Fig. 3 are all "available". In this case, the prediction preparing section 312 generates a prediction value of the pixel signals a to p of the block by using the pixel signals A to D and I to M, as in Fig. 4E and Expression 18.

m:          $(J+2K+L+2)>>2$

i,n:          $(I+2J+K+2)>>2$

e,j,o:    $(M+2I+J+2)>>2$

a,f,k,p: $(A+2M+I+2)>>2 \ldots (18)$

b,g,l:    $(M+2A+B+2)>>2$

c,h:          $(A+2B+C+2)>>2$

d:          $(B+2C+D+2)>>2$

Mode 5

Mode 5 corresponds to "a vertical-right prediction". Mode 5 is applied, when the pixel signals A to D and I to M shown in Fig. 3 are all "available". In this case, the prediction preparing section 312 generates prediction value of the pixel signals a to p of the block by using the pixel signals A to D and I to M, as in Fig. 4F and Expression 19.

a,j:          $(M+A+I)>>1$

b,k:          $(A+B+1)>>1$

c,l:          $(B+C+1)>>1$

d:          $(C+D+1)>>1$

e,n:          $(I+2M+A+2)>>2 \ldots (19)$

f,o:          $(M+2A+B+2)>>2$

g,p:          $(A+2B+C+2)>>2$

h:          $(B+2C+D+2)>>2$

i:          $(M+2I+J+2)>>2$

m:          $(I+2J+K+2)>>2$

Mode 6

Mode 6 corresponds to "a horizontal-down prediction". Mode 6 is applied, when the pixel signals A to D and I to M shown in Fig. 3 are all "available". In this case, the prediction preparing section 312 generates a prediction value of the pixel signals a to p of the block by using the pixel signals A to D and I to M, as in Fig. 4G and Expression 20.

| a,g: | $(M+I+1)>>1$ |
| b,h: | $(I+2M+A+2)>>2$ |
| c: | $(M+2A+B+2)>>2$ |
| d: | $(A+2B+C+2)>>2$ |
| e,k: | $(I+J+1)>>1 \dots (20)$ |
| f,l: | $(M+2I+J+2)>>2$ |
| i,o: | $(J+K+1)>>1$ |
| j,p: | $(I+2J+K+2)>>2$ |

| m: | $(K+L+1)>>1$ |
| n: | $(J+2K+L+2)>>2$ |

Mode 7

Mode 7 corresponds to "a vertical-left prediction". Mode 7 is applied, when the pixel signals A to D and I to M shown in Fig. 3 are all "available". In this case, the prediction preparing section 312 generates prediction value of the pixel signals a to p of the block by using the pixel signals A to D and I to M, as in Fig. 4H and Expression 21.

| a: | $(A+B+1)>>1$ |
| b,i: | $(B+C+1)>>1$ |
| c,j: | $(C+D+1)>>1$ |
| d,k: | $(D+E+1)>>1$ |
| l: | $(E+F+1)>>1 \dots (21)$ |
| e: | $(A+2B+C+2)>>2$ |
| f,m: | $(B+2C+D+2)>>2$ |
| g,n: | $(C+2D+E+2)>>2$ |
| h,o: | $(D+2E+F+2)>>2$ |
| p: | $(E+2F+G+2)>>2$ |

Mode 8

Mode 8 corresponds to "a horizontal-up prediction". Mode 8 is applied, when the pixel signals A to D and I to M shown in Fig. 3 are all "available". In this case, the prediction preparing section 312 generates prediction value of the pixel signals a to p of the block by using the pixel signals A to D and I to M, as in Fig. 4I and Expression 22.

a: $(I+J+1)>>1$

b: $(I+2J+K+2)>>2$

c,e: $(J+K+1)>>1$

d,f: $(J+2K+L+2)>>2 \dots (22)$

g,i: $(K+L+1)>>1$

h,j: $(K+3L+2)>>2$

k,l,m,n,o,p: L

The prediction mode of the encoding target block of the color difference signal is set to any one of Mode 0 which is the vertical prediction, Mode 1 which is the horizontal prediction, and Mode 2 which is the DC prediction.

5. Luminance Intra-Prediction Operation

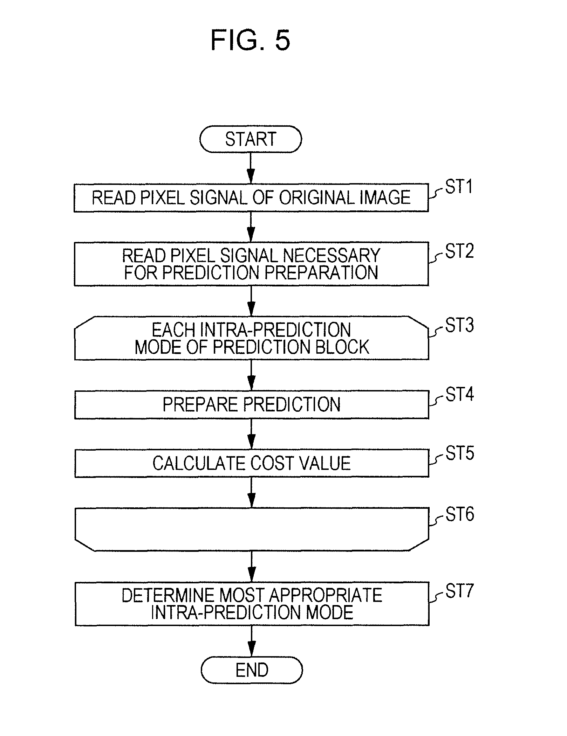

Next, the intra-prediction operation of the luminance component will be described. Fig. 5 is a flowchart illustrating the intra-prediction operation on one encoding target block of the luminance component.

In step ST1, the intra-prediction unit 31 reads the pixel signals of the original image. The intra-prediction unit 31 outputs the luminance signal of the encoding target block of ($4 \times 4$) pixels to the SA(T)D calculation section 314 from the luminance signals of the original image stored in the processing macroblock image memory 311, and then the process proceeds to step ST2.

In step ST2, the intra-prediction unit 31 reads the pixel signals necessary for prediction preparation. The intra-prediction unit 31 reads the pixel signals (luminance signals) necessary for the prediction preparation from the frame memory 25 and supplies the read pixel signals to the prediction preparing section 312, and then the process proceeds to step ST3.

In steps ST3 to ST6, the process is executed on the encoding target block of the luminance component in each intra-prediction mode. In step ST4, the intra-prediction unit 31 permits the prediction preparing section 312 to prepare the prediction and stores the prediction in the prediction storage memory 313, and then the process proceeds to step ST5.

In step ST5, the intra-prediction unit 31 calculates the cost values. The intra-prediction unit 31 permits the SA (T)D calculation section 314 and the cost derivation section 315 to calculate the cost values by using the luminance signals of the original image of the encoding target block and the luminance signals of the prediction prepared in step ST4.

The process in steps ST4 and ST5 is executed for each intra-prediction mode of the luminance signals. When the calculation of the cost values is completed for all the intra-prediction modes, the process proceeds from step ST6 to step ST7.

In step ST7, the intra-prediction unit 31 determines the optimum intra-prediction mode. The cost comparison section 316 of the intra-prediction unit 31 compares the cost values calculated for each intra-prediction mode of the luminance component to determine the mode with the smallest cost value as the optimum intra-prediction mode of the encoding target block.

The intra-prediction unit 31 executes the intra-prediction operation shown in Fig. 5 on each encoding target block of the macroblock to determine the intra-prediction mode for each encoding target block.

6. Color Difference Intra-Prediction Operation

In the intra-prediction operation of the color difference signal, the weight of each prediction direction of the color difference component is calculated using the intra-prediction mode determined for the encoding target block of the luminance component in the macroblock, and then the optimum prediction mode of the color difference component is determined from the comparison result of the calculated weights. For example, when the intra-prediction operation of the color difference component is executed in a unit of the macroblock of ($16 \times 16$) pixels, the encoding target block of the luminance signal is a block of ($4 \times 4$) pixels and the number of blocks of the luminance component corresponding to the encoding target block (one macroblock) of the color difference signal is sixteen. Accordingly, the weights of the vertical and horizontal directions are calculated on the basis of the intra-prediction modes determined for the sixteen blocks in the macroblock. Moreover, one of Mode 0 (average prediction), Mode 1 (horizontal prediction), and Mode 2 (vertical prediction) is determined as the optimum prediction mode of the color difference component from the comparison result of the calculated weights.

Here, Modes 0 to 8 are provided as the intra-prediction mode of the luminance component. Modes 0 to 8 are allocated as the vertical mode, horizontal mode, and the like. The weight of the vertical or horizontal direction is calculated using the allocated mode.

Table 1 shows the correspondence relationship of the prediction modes of the luminance component and the allocated modes. For example, in that Mode 0 among the prediction modes of the luminance component is the prediction of the vertical direction, Mode 0 is referred to as Mode V of the vertical direction. In that the prediction direction of Modes 3, 5, and 7 among the prediction modes of the luminance component is close to the vertical direction, Modes 3, 5, and 7 are also referred to as Mode V. In that Mode 1 among the prediction modes of the luminance component is the prediction of the horizontal direction, Mode 1 is referred to as Mode H of the horizontal direction. In that the prediction direction of Modes 6 and 8 among the prediction modes of the luminance component is close to the horizontal direction, Modes 6 and 8 are also referred to as Mode H. Modes 2 and 4 among the prediction modes of the luminance component may be referred to as Mode DC. Alternatively, the weight may be calculated without using Modes 2 and 4 among the prediction modes of the luminance component. Alternatively, Modes 2 and 4 among the prediction modes of the luminance component may be referred to as a mode corresponding to both the modes of the vertical and horizontal directions.

Table 1

| PREDICTION MODE OF PRECISION SIGNAL (4×4 PIXELS) | | PREDICTION MODE ALLOCATED | ADDITIONAL VALUE |
|---|---|---|---|
| MODE 0 | vertical | MODE V | 2 |
| MODE 1 | horizontal | MODE H | 2 |
| MODE 2 | DC | - | - |
| MODE 3 | diagonal down-left | MODE V | 1 |
| MODE 4 | diagonal down-right | - | - |
| MODE 5 | vertical-right | MODE V | 1 |
| MODE 6 | horizontal-down | MODE H | 1 |
| MODE 7 | vertical-left | MODE V | 1 |
| MODE 8 | horizontal-up | MODE H | 1 |

In the calculation of the weight, the frequency of the allocated modes is used, or the frequency of the modes in a predetermined region of the encoding target block of the color difference component is used.

In the calculation of the weight, continuity of the blocks of the luminance component of which the allocated mode is the same is used, or a direction in which the blocks with the same allocated mode is continuous is used.

In the calculation of the weight, an additional value corresponding to the block of the luminance component is used. The additional value is set in each intra-prediction mode of the block of the luminance component, as shown in Table 1, for example. The additional value is the largest, when the direction of modes (for example, Modes 0 and 1 in the prediction mode of the luminance component) is the same as the vertical or horizontal direction. The additional value is set to a value smaller than the additional value of the mode of which the direction is the vertical or horizontal direction, when the direction of the modes (for example, Modes 3, 5, 6, 7, and 8 in the prediction mode of the luminance component) is inclined with respect to the vertical or horizontal direction. Alternatively, the additional value may be set using the cost value calculated for each block of the luminance component or the SA(T)D value. When Modes 2 and 4 among the prediction modes of the luminance component are set to the mode corresponding to both the modes of the vertical and horizontal directions, the additional value of Modes 2 and 4 is set to be smaller than that of the other modes.

In the calculation of the weight, the intra-prediction modes of the color difference component may be determined with more precision by combining the above methods of setting the additional values.

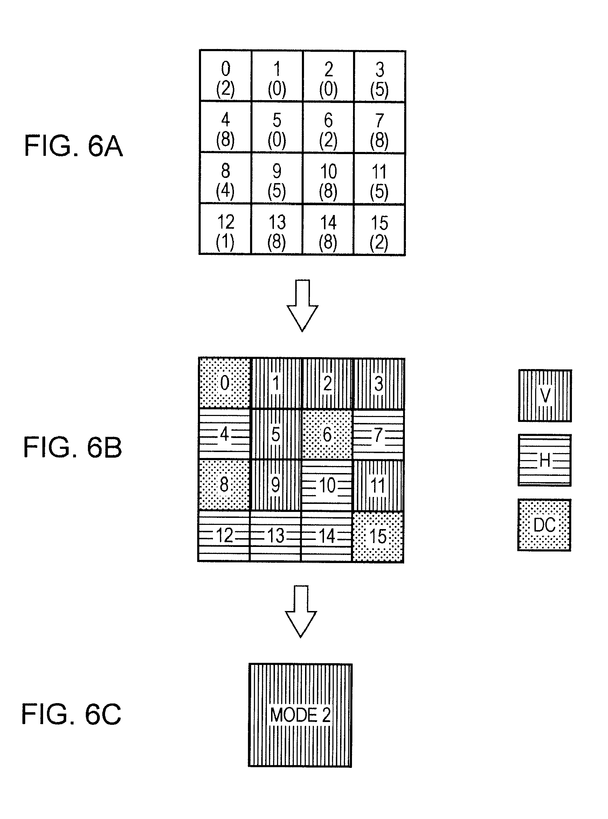

Hereinafter, the weight calculating operation will be described. Figs. 6A to 6C are diagrams illustrating the weight calculating operation to determine the intra-prediction mode of the color difference component with more precision. In the weight calculating operation, the weight is calculated for each prediction direction in consideration of the frequency of the allocated modes in a pre-designated region of the encoding target block of the color difference component and the continuity of the allocated blocks in a predetermined direction.

Fig. 6A shows the intra-prediction modes determined for the encoding target blocks of the luminance component corresponding to the encoding target blocks (one macroblock) of the color difference component. In Fig. 6A, the modes are given in parentheses. For example, Mode 2 is given for Block 0, Mode 0 is given for Block 1, ..., and Mode 2 is given for Block 15. Fig. 6B shows that the prediction modes determined in the encoding target blocks of the luminance component in the macroblock are allocated on the basis of Table 1. Fig. 6C shows the encoding target blocks of the color difference component determined on the basis of the calculated weights.

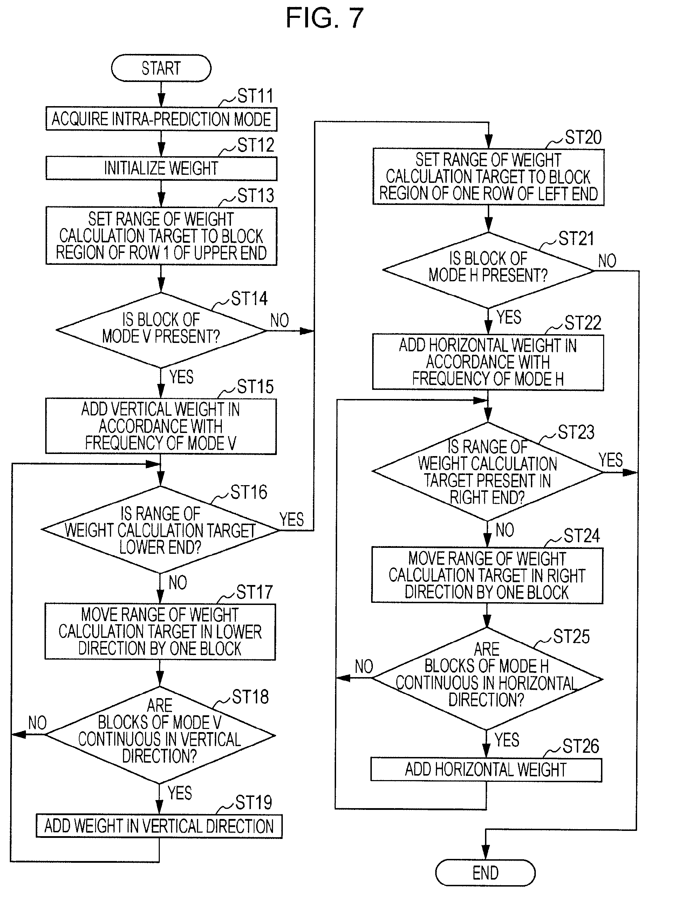

Fig. 7 is a flowchart illustrating the weight calculating operation. In Fig. 7, the weight calculated depending on the frequency of each mode is added in accordance with the continuity number of blocks of the same mode in a predetermined direction.

In step ST11 of Fig. 7, the weight calculation section 317 acquires the intra-prediction mode of the luminance component in the macroblock. From the cost comparison unit 316, the individual-mode weight calculation section 317a of the weight calculation section 317 acquires the mode of each encoding target block of the luminance component in the macroblock to be subjected to the intra-prediction operation of the color difference component.

In step ST12, the weight calculation section 317 initializes the weight. The individual-mode weight calculation section 317a of the weight calculation section 317 initializes the vertical weight and horizontal weight to set the vertical weight and the horizontal weight to "0", for example, and the process proceeds to step ST13.

In step ST13, the weight calculation section 317 sets a range of a vertical weight calculation target to a block region of one line in the upper end of the encoding target block of the color difference component, and then the process proceeds to step ST14.

In step ST14, the weight calculation section 317 determines whether a block of the allocated Mode V falls in the range of the weight calculation target. When the weight calculation section 317 determines that the block of Mode V falls in the range, the process proceeds to step ST15. Alternatively, the weight calculation section 317 determines that the block of Mode V does not fall in the range, the process proceeds to step ST20.

In step ST15, the weight calculation section 317 adds the vertical weight depending on the frequency of Mode V. The individual-mode weight calculation section 317a of the weight calculation section 317 calculates the sum of the additional values of the blocks of Mode V from the blocks falling in the range of the weight calculation target and sets the sum to the vertical weight. Then, the process proceeds to step ST16. In Fig. 6B, for example, since the mode of Block 1, 2, and 3 is Mode V and the intra-prediction mode of the luminance component of Block 1 and 2 is Mode 0, the additional value of "2" shown in Table 1 is added. Since the intra-prediction mode of the luminance component of Block 3 is Mode 5, the additional value of "1" shown in Table 1 is added. Therefore, the vertical weight becomes "2+2+1=5".

In step ST16, the weight calculation section 317 determines whether the range of the weight calculation target is the lower end of the encoding target block of the color difference component. When the weight calculation section 317 determines that the range of the weight calculation target is not the lower end of the encoding target block of the color difference component, the process proceeds to step ST17. Alternatively, when the weight calculation section 317 determines that the range of the weight calculation target is the lower end of the encoding target block of the color difference component, the process proceeds to step ST20.

In step ST17, the weight calculation section 317 moves the range of the vertical weight calculation target in a lower direction by one block, and then the process proceeds to step ST18.

In step ST18, the weight calculation section 317 determines whether the blocks of Mode V are continuous vertically. When the weight calculation section 317 determines that the blocks of Mode V are continuous vertically, the process proceeds to step ST19. Alternatively, when the weight calculation section 317 determines that the blocks of Mode V are not continuous, the process returns to step ST16.

In step ST19, the weight calculation section 317 adds the vertical weight. The vertical weight addition section 317b of the weight calculation section 317 adds the additional value of the vertically continuous blocks to the vertical weight and sets the sum of the additional values to a new vertical weight. Then, the process proceeds to step ST16. In Fig. 6B, for example, Block 5 of Mode V is continuous vertically with Block 1. Block 9 of Mode V is continuous vertically with Block 5. Accordingly, since the prediction mode of the luminance component in Block 5 is Mode 0, the additional value "2" corresponding to Block 5 is added to the vertical weight. Moreover, since the prediction mode of the luminance component in Block 9 is Mode 5, the additional value "1" " corresponding to Block 9 is added to the vertical weight. For this reason, the vertical weight becomes "8".

In this way, when the process from step ST13 to step ST19 is executed, the vertical weight based on the distribution of the allocated modes can be calculated. That is, the vertical weight is calculated in consideration of the frequency of the allocated modes in the pre-designated region of the encoding target blocks of the color difference component and the continuity of the vertical direction of the allocated blocks.

In step ST20, the weight calculation section 317 sets one line of the left end of the encoding target block of the color difference component as the range of the horizontal weight calculation target, and then the process proceeds to step ST21.

In step ST21, the weight calculation section 317 determines whether the allocated block of Mode H falls in the range of the weight calculation target. When the weight calculation section 317 determines that the block of Mode H falls in the range of the weight calculation target, the process proceeds to step ST22. Alternatively, when the weight calculation section 317 determines that the block of Mode H does not fall in the range of the weight calculation target, the process ends.

In step ST22, the weight calculation section 317 adds the horizontal weight in accordance with the frequency of Mode H. The individual-mode weight calculation section 317a of the weight calculation section 317 adds the additional values of the blocks of Mode H from the block falling in the range of the weight calculation target, and then the process proceeds to step ST23. In Fig. 6B, for example, since the mode of Blocks 4 and 12 is Mode H and the intra-prediction mode of the luminance component of Block 4 is Mode 8, the additional value of "1" shown in Table 1 is added. Moreover, since the intra-prediction mode of the luminance component of Block 12 is Mode 1, the additional value of "2" shown in Table 1 is added. Therefore, the horizontal weight becomes "3".

In step ST23, the weight calculation section 317 determines whether the range of the weight calculation target is the right end of the encoding target block of the color difference component. When the weight calculation section 317 determines that the range of the weight calculation target is not the right end of the encoding target block of the color difference component, the process proceeds to step ST24. Alternatively, when the weight calculation section 317 determines that the range of the weight calculation target is the right end of the encoding target block of the color difference component, the process ends.

In step ST24, the weight calculation section 317 moves the range of the horizontal weight calculation target in the right direction by one block, and then the process proceeds to step ST25.

In step ST25, the weight calculation section 317 determines whether the blocks of Mode H are continuous horizontally. When the weight calculation section 317 determines that the blocks of Mode H are continuous horizontally, the process proceeds to step ST26. Alternatively, when the weight calculation section 317 determines that the blocks of Mode H are not continuous horizontally, the process proceeds to step ST23.

In step ST26, the weight calculation section 317 adds the horizontal weight. The horizontal weight addition section 317b of the weight calculation section 317 adds the additional values of the horizontally continuous blocks to the horizontal weight and sets the sum of the additional values as a new horizontal weight. Then, the process returns to step ST23. In Fig. 6B, for example, Block 13 of Mode H is continuous horizontally with Block 12. Block 14 of Mode H is continuous horizontally with Block 13. Accordingly, since the prediction mode of the luminance component in Blocks 13 and 14 is Mode 8, the additional value "1" corresponding to Blocks 13 and 14 is added to the horizontal weight. For this reason, the horizontal weight becomes "5".

In this way, when the process from step ST20 to step ST26 is executed, the horizontal weight based on the distribution of the allocated modes can be calculated. That is, the horizontal weight is calculated in consideration of the frequency of the allocated modes in the pre-designated region of the encoding target blocks of the color difference component and the continuity of the horizontal direction of the allocated blocks.

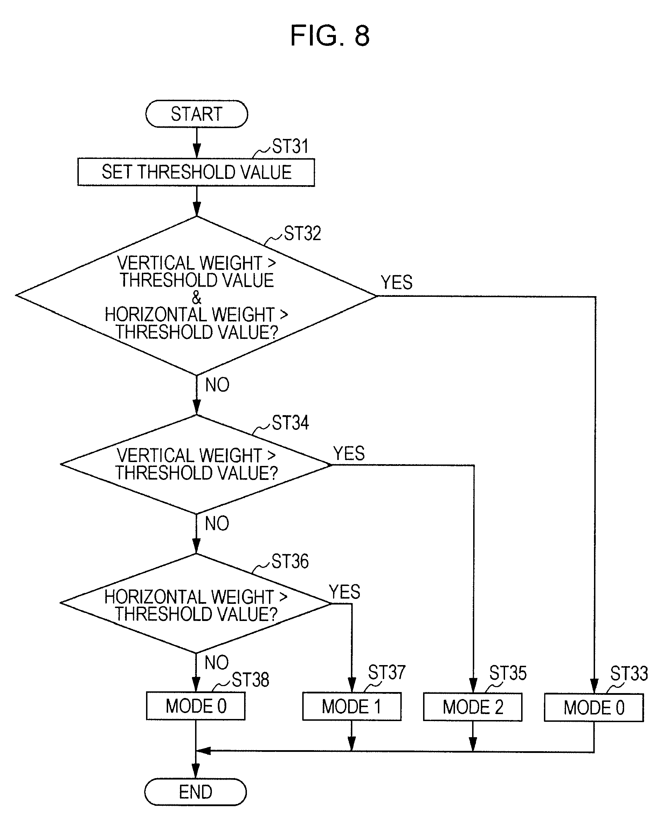

Next, the prediction mode determining operation of determining the optimum prediction mode from the comparison result of the calculated weights will be described with reference to the flowchart shown in Fig. 8.

In step ST31, the color difference prediction mode determination section 318 sets a threshold value. The color difference prediction mode determination section 318 sets the threshold value used to determine whether the calculated weight becomes a threshold having a meaning in determining the prediction mode.

In step ST32, the color difference prediction mode determination section 318 determines whether both the vertical weight and the horizontal weight are larger than the threshold value. When the color difference prediction mode determination section 318 determines that both the vertical weight and the horizontal weight are larger than the threshold value, the process proceeds to step ST33. Alternatively, when the color difference prediction mode determination section 318 determines that either the vertical weight or the horizontal weight or both thereof are equal to or smaller than the threshold value, the process proceeds to step ST34.

In step ST33, the color difference prediction mode determination section 318 determines Mode 0 (average prediction) as the prediction mode of the encoding target block (one macroblock) of the color difference component, and then the prediction mode determining process ends.

In step ST34, the color difference prediction mode determination section 318 determines whether the vertical weight is larger than the threshold value. When the color difference prediction mode determination section 318 determines that the vertical weight is larger than the threshold value, the process proceeds to step ST35. When the color difference prediction mode determination section 318 determines that the vertical weight is equal to or smaller than the threshold value, the process proceeds to step ST36.

In step ST35, the color difference prediction mode determination section 318 determines Mode 2 (vertical prediction) as the prediction mode of the encoding target block (one macroblock) of the color difference component, and then the prediction mode determining process ends.

In step ST36, the color difference prediction mode determination section 318 determines whether the horizontal weight is larger than the threshold value. When the color difference prediction mode determination section 318 determines that the horizontal weight is larger than the threshold value, the process proceeds to step ST37. When the color difference prediction mode determination section 318 determines that the horizontal weight is equal to or smaller than the threshold value, the process proceeds to step ST38.

In step ST37, the color difference prediction mode determination section 318 sets Mode 1 (horizontal prediction) as the prediction mode of the encoding target block (one macroblock) of the color difference component, and then the prediction mode determining process ends.

In step ST38, the color difference prediction mode determination section 318 determines Mode 0 (average prediction) as the prediction mode of the encoding target block (one macroblock) of the color difference component, and then the prediction mode determining process ends.

For example, when the process shown in Fig. 7 is executed, the vertical weight becomes "8" and the horizontal weight becomes "5". Here, when the threshold value is set to "6" in step ST31 of Fig. 8, the process of step ST35 is executed to determine Mode 2 (vertical prediction) as the encoding target block of the color difference component, as shown in Fig. 6C.

In this way, when the prediction mode of the color difference component is determined using the prediction mode of the luminance component, it is not necessary to calculate the SA(T)D or derive the cost value by using the color difference signal. Accordingly, the hardware size of the image processing apparatus can be reduced. Moreover, the signal processing load can be reduced.

For example, in a method according to related art, the SA(T)D has to be calculated 32 times in order to calculate the SA(T)D or derive the cost value for the color difference signal. Specifically, 32 times is equal to 4 (the mode number of intra-chroma modes) x4 (the number of $4\times4$ blocks in an $8\times8$ block) x2 (components of Cb and Cr of the color difference signal). In order to calculate the 4 by 4 SAD, subtraction of 16 times and addition of 16 times are necessary, as shown in Expression 1. Moreover, in order to calculate the 4 by 4 SA(T)D, subtraction of 16 times, addition of 16 times, and two dimensional orthogonal transform are necessary, as shown in Expression 2.

In this way, when the intra-prediction mode of the 4 by 4 luminance component is used, it is preferable that the comparison is executed 37 times and the addition is executed 32 times. For example, the determination whether the prediction direction of the intra-prediction of the luminance component is vertical is executed 16 times at maximum, that is, 4 (the number of $4\times4$ blocks in a column direction in one macroblock) $\times$ 4 (the number of $4\times4$ blocks in a row direction in one macroblock). The determination whether the prediction direction of the intra-prediction of the luminance component is horizontal is executed 16 times at maximum, that is, 4 (the number of $4\times4$ blocks in a column direction in one macroblock) $\times$ 4 (the number of $4\times4$ blocks in a row direction in one macroblock). In addition, since the vertical weight and the horizontal weight are compared to the threshold value 3 times at maximum, the comparison is executed 37 times at maximum.

Since it is not necessary to calculate the SA(T)D from the color difference signal and it is not necessary to prepare the pixel signal of the color difference component, advantages of reducing the size of a memory device and reducing bandwidth can be obtained. For example, when the SA(T)D of the color difference signal is calculated, a memory is necessary to store the pixels corresponding to one line adjacent on the upper side and the pixels of the macroblock being processed now. Here, when the image signal has the YUV420 format and 1920 pixels $\times$ 1080 lines are present, a memory storing pixel signals of 1920 pixels (960 pixels of Cb component and 960 pixels of a Cr component) is necessary to store the pixels corresponding to one line adjacent on the upper side. In order to store the pixels of the macroblock being processed now, a memory storing the pixel signal of 128 pixels (64 pixels of $8\times8$ in a Cb component and 64 pixels of $8\times8$ in a Cr component) is necessary. In order to further store the prediction, a memory storing a signal of 512 pixels (128 pixels $\times$ 4 modes) is necessary. However, when the intra-prediction mode of the 4 by 4 luminance component is used, a memory storing the intra-prediction mode of the luminance component corresponding to 16 blocks may be used.

7. Different Method (1) of Calculating Weight and Determining Intra-Prediction Mode

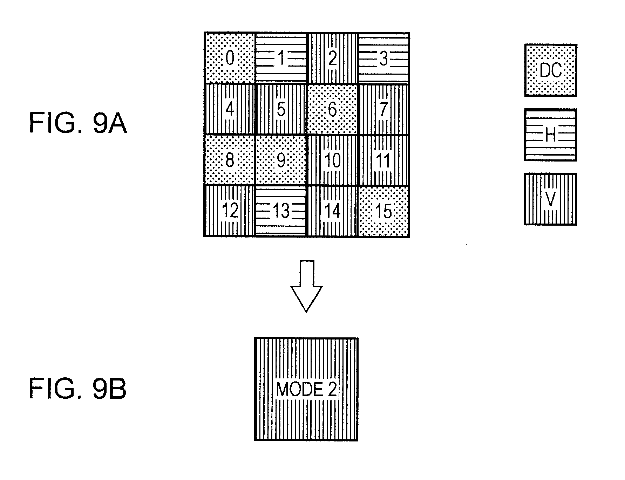

The calculation of the weight or the determination of the prediction mode is not limited to the processes shown in Figs. 7 and 8. Next, another method of calculating the weight and determining the prediction mode will be described. Figs. 9 are diagrams illustrating a different method of calculating the weight and determining the prediction mode by using only the frequency of the mode.

The weight calculation section 317 allocates sixteen encoding target blocks of the luminance component corresponding to the encoding target blocks of the color difference component on the basis of Table 1. Fig. 9A shows the modes after the allocation. The weight calculation section 317 uses the number of blocks of Mode V as the vertical weight. The weight calculation section 317 uses the number of blocks of Mode H as the horizontal weight. The weight calculation section 317 sets the modes, which are not Mode H and Mode V, as Mode DC and calculates the number of blocks of Mode DC as the weight of Mode DC. For example, when the allocated modes are the modes shown in Fig. 9A, the weight calculation section 317 sets the vertical weight to "8" in that the number of blocks of Mode V is "8". The weight calculation section 317 sets the horizontal weight to "3" in that the number of blocks of Mode H is "3". The weight calculation section 317 sets the weight of mode DC to "5" in that the number of blocks of which the mode is not Mode H and Mode V is "5".

The color difference prediction mode determination section 318 selects the weight with the largest value from the vertical weight, the horizontal weight, and the weight of Mode DC to determine the mode corresponding to the selected weight as the prediction mode of the color difference component. For example, in the case of Fig. 9A, the Mode 2 is determined as the prediction mode of the color difference component, as shown in Fig. 9B, in that the vertical weight has the largest value.

Since the number of blocks of Mode V or Mode H is used as the weight and the mode corresponding to the weight with the largest value is determined as the prediction mode of the color difference component, the prediction mode of the color difference component can be determined with the simple configuration.

8. Different Method (2) of Calculating Weight and Determining Intra-Prediction Mode

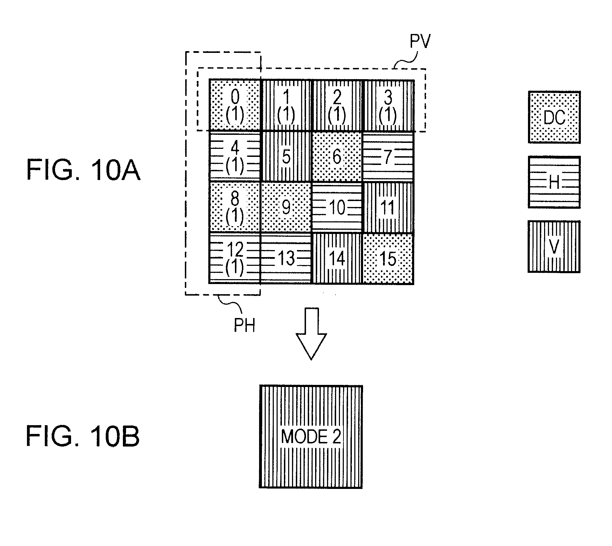

Figs. 10A and 10B are diagrams illustrating a different method of calculating the weight and determining the prediction mode by using the frequency of each mode and the weight corresponding to the prediction mode of the luminance component.

The weight calculation section 317 allocates sixteen encoding target blocks of the luminance component corresponding to the encoding target blocks of the color difference component on the basis of Table 1. Fig. 10A shows the modes after the allocation. For each block shown in Fig. 10A, the weight corresponding to the prediction mode of the luminance component is given parenthesis. For example, "1" is given in parenthesis.

The weight calculation section 317 calculates the vertical weight by using the additional value of Mode V in a region PV pre-designated to calculate the number of blocks of Mode V and the vertical weight. The weight calculation section 317 calculates the horizontal weight by using the additional value of Mode H in a region PH pre-designated to calculate the number of blocks of Mode H and the horizontal weight. The weight calculation section 317 calculates the weight of Mode DC by using the additional value of Mode DC in the common portion of the regions pre-designated to calculate the number of blocks of Mode DC, the vertical weight, and the horizontal weight. Mode DC is set to the block of which the mode is not Mode H and Mode V. For example, a case where the allocated modes are the modes shown in Fig. 10A will be described. The weight calculation section 317 sets the vertical weight to "6+3", in that the number of blocks of Mode V is "6" and the additional value of Blocks 1, 2, and 3 of Mode V in the region PV pre-designated to calculate the vertical weight is "1". The weight calculation section 317 sets the horizontal weight to "5+2", in that the number of blocks of Mode H is "5" and the additional value of Blocks 4 and 12 of Mode H in the region PH pre-designated to the calculate the horizontal weight is "1". The weight calculation section 317 sets the weight of Mode DC to "5+1", in that the number of blocks of Mode DC is "5" and the additional value of Block 0 of Mode DC in the regions pre-designated to the calculate the vertical weight and the horizontal weight is "1".

The color difference prediction mode determination section 318 selects the weight with the largest value by using the vertical weight, the horizontal weight, and the weight of Mode DC to determine the mode corresponding to the selected weight as the prediction mode of the color difference component. For example, in the case of Fig. 10A, the Mode 2 is determined as the prediction mode of the color difference component, as shown in Fig. 10B, in that the vertical weight has the largest value.

In this way, the prediction mode can be determined using the frequency of each mode and the additional value corresponding to the prediction mode of the luminance component. The additional value of Mode DC in the region pre-designated to calculate the vertical weight and the additional value of Mode DC in the regions pre-designated to calculate the horizontal weight may be used in calculating the weight of Mode DC.

9. Different Method (3) of Calculating Weight and Determining Intra-Prediction Mode

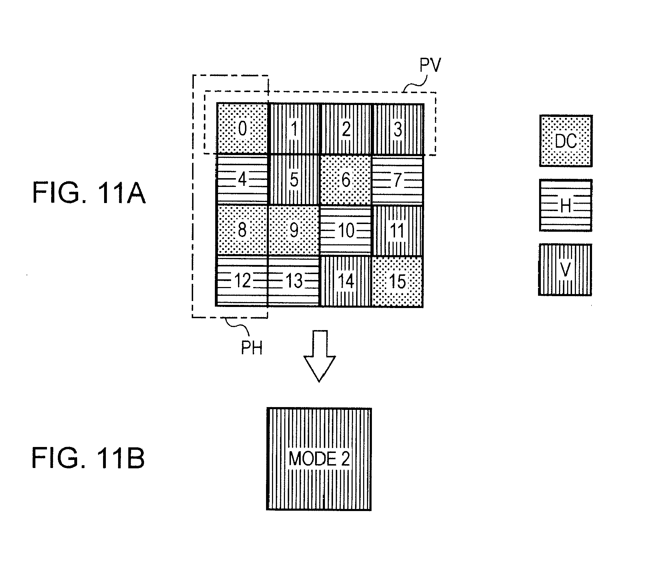

Figs. 11A and 11B are diagrams illustrating a different method of calculating the weight and determining the prediction mode to calculate the weight by using the frequency of each mode and the weight corresponding to the prediction mode of the luminance component.

The weight calculation section 317 allocates sixteen encoding target blocks of the luminance component corresponding to the encoding target blocks of the color difference component on the basis of Table 1. Fig. 11A shows the modes after the allocation.

The weight calculation section 317 sets the number of blocks of Mode V in a region PV pre-designated to calculate the vertical weight to the vertical weight. The weight calculation section 317 sets the number of blocks of Mode H in a region PH pre-designated to calculate the horizontal weight to the horizontal weight. The weight calculation section 317 sets the mode, which is not the Mode H and Mode V, as the block of Mode DC and sets the number of blocks of Mode DC in regions PV and PH pre-designated to calculate the vertical weight and the horizontal weight as the weight of Mode DC. For example, when the allocated modes are the modes shown in Fig. 11A, the weight calculation section 317 sets the vertical weight to "3", in that the mode of Blocks 1, 2, and 3 is Mode V in the region PV pre-designated to calculate the vertical weight. The weight calculation section 317 sets the horizontal weight to "2", in that the mode of Blocks 4 and 12 is Mode H in the region PH pre-designated to calculate the horizontal weight. The weight calculation section 317 sets the weight of Mode DC to "2", in that the mode of Blocks 0 and 8 is Mode DC in the regions PV and PH.

The color difference prediction mode determination section 318 selects the weight with the largest value by using the vertical weight, the horizontal weight, and the weight of Mode DC to determine the mode corresponding to the selected weight as the prediction mode of the color difference component. For example, in the case of Fig. 11A, the Mode 2 (vertical prediction) is determined as the prediction mode of the color difference component, as shown in Fig. 11B, in that the vertical weight has the largest value.

In this way, the prediction mode can be determined using only the frequency of each mode in the pre-designated region.

10. Different Method (4) of Calculating Weight and Determining Intra-Prediction Mode

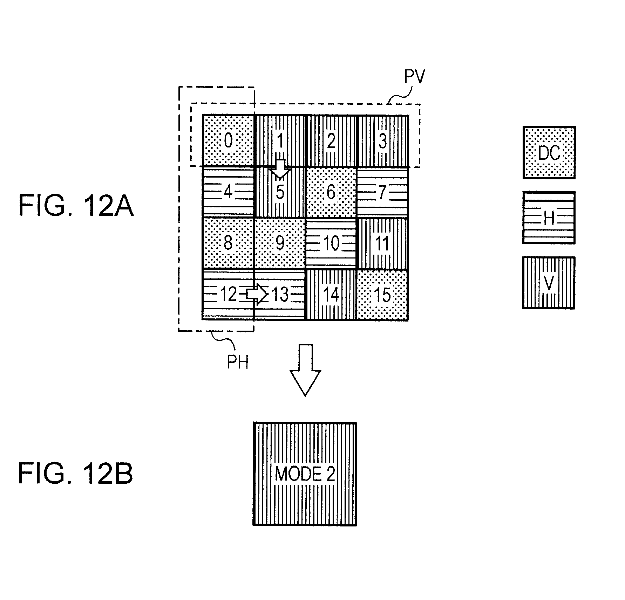

Figs. 12A and 12B are diagrams illustrating a different method of calculating the weight and determining the prediction mode. In the different method described with reference to Figs. 12A and 12B, the weight corresponding to the continuous number of blocks of Mode V is added to the vertical weight calculated in accordance with the frequency of the mode, and the weight corresponding the continuous number of blocks of Mode H is added to the horizontal weight calculated in accordance with the frequency of the mode. In Figs. 12A and 12B, the vertically continuous number of blocks from the block located in the upper end of the macroblock and the horizontally continuous number of blocks from the block located in the left end of the macroblock are used.

The weight calculation section 317 allocates sixteen encoding target blocks of the luminance component corresponding to the encoding target blocks of the color difference component on the basis of Table 1. Fig. 12A shows the modes after the allocation.

The weight calculation section 317 adds the number of blocks of Mode V in a region PV pre-designated to calculate the vertical weight and the number of vertically continuous blocks from the block of Mode V in the region PV, and sets the sum as the vertical weight. The weight calculation section 317 adds the number of blocks of Mode H in a region PH pre-designated to calculate the horizontal weight and the number of horizontally continuous blocks from the block of Mode H in the region PH, and sets the sum as the horizontal weight. For example, a case where the allocated modes are the modes shown in Fig. 12A will be described. The weight calculation section 317 sets the vertical weight to "3+1", in that the mode of Blocks 1, 2, and 3 is Mode V in the region PV pre-designated to calculate the vertical weight and Block 5 of Mode V is continuous vertically with Block 1. The weight calculation section 317 sets the vertical weight to "2+1 ", in that the mode of Blocks 4 and 12 is Mode H in the region PH pre-designated to calculate the horizontal weight and Block 13 of Mode H is continuous horizontally with Block 12.

The color difference prediction mode determination section 318 executes the prediction mode determining operation shown in Fig. 8 to determine whether the prediction mode of the color difference component is Modes 0 to 2, by using the vertical weight, the horizontal weight, and the preset threshold value. For example, in the case of Fig. 12A, when the threshold value is set to "3", Mode 2 (vertical prediction) is determined as the prediction mode of the color difference component, as shown in Fig. 12B.

In this way, the prediction mode of the color difference component can be determined using the frequency of each mode and the continuity and the continuous direction of the blocks of the luminance component. As for the continuity, the vertical weight or the horizontal weight is added in accordance with the number of vertically continuous blocks or the number of horizontally continuous blocks in the macroblock.

11. Different Method (5) of Calculating Weight and Determining Intra-Prediction Mode

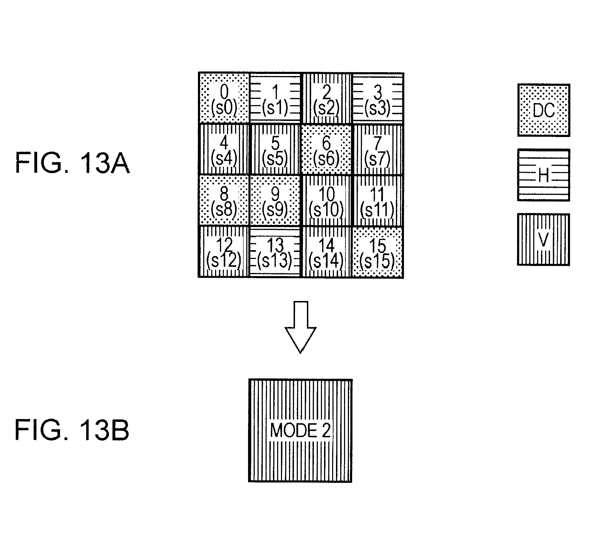

Figs. 13A and 13B are diagrams illustrating a different method of calculating the weight and determining the prediction mode to determine the prediction mode of the luminance component by using the value representing the calculated encoding efficiency, for example, the SA(T)D or the cost value.

The weight calculation section 317 allocates sixteen encoding target blocks of the luminance component corresponding to the encoding target blocks of the color difference component on the basis of Table 1. Fig. 13A shows the modes after the allocation. In Fig. 13A, the value of the SA(T)D in each block is given parenthesis.

The weight calculation section 317 adds the SA(T)D of the block of Mode V and sets the sum as the vertical weight. The weight calculation section 317 adds the SA(T)D of the block of Mode H and sets the sum as the horizontal weight. The weight calculation section 317 sets the block of which the mode is not Mode H and Mode V as the block of Mode DC, adds the SA(T)D of the block of Mode DC, and sets the sum as the weight of Mode DC. For example, in the case where the allocated modes are the modes shown in Fig. 13A, the weight calculation section 317 sets the vertical weight to "s2+S4+s5+s7+s10+s11+s12+s14", in that the mode of Blocks 2, 4, 5, 7, 10, 11, 12, and 14 is Mode V. The weight calculation section 317 sets the horizontal weight to "s1+s3+s1", in that the mode of Blocks 1, 3, and 13 is Mode H. The weight calculation section 317 sets the weight of Mode DC to "s0+s6+s8+s9+s15", in that the mode of Blocks 0, 6, 8, 9, and 15 is Mode DC.

The color difference prediction mode determination section 318 determines the mode with the smallest cost as the prediction mode of the color difference component by using the vertical weight, the horizontal weight, and the weight of Mode DC. For example, in the case of Fig. 11A, the Mode 2 (vertical prediction) is determined as the prediction mode of the color difference component, as shown in Fig. 13B, in that the vertical weight has the smallest value.

In this way, the prediction mode can be determined using only the additional value set for the prediction mode of the luminance component.

Even though not illustrated, the additional value of the weight may be set in accordance with the value representing the encoding efficiency calculated for each encoding target block of the luminance component, for example, the SA(T)D or the cost value, and the additional value of the block used to calculate the weight may be added to the vertical weight or the horizontal weight calculated in accordance with the frequency of the mode and the continuity. For example, when the SA(T)D or the cost value is small, the additional value of the weight is large. Alternatively, when the SA(T)D or the cost value is large, the additional value of the weight is small. In this way, by setting the additional value of the weight and weighting the vertical weight or the horizontal weight in accordance with the SA(T)D or the cost value, the optimum prediction mode can be determined, compared to the case where the vertical weight or the horizontal weight is determined using only the number of blocks.

The method of calculating the weight and determining the prediction mode has been described as an example. However, as described above, by selectively combining the frequency of each mode, the frequency of each mode in the pre-designated region of the encoding target block of the color difference component, the continuity of the blocks of the luminance component of which the allocated mode is the same, the continuous direction of the blocks of which the allocated mode is the same, the additional value corresponding to the block of the luminance component, and the like, and by comparing the calculated weights, the intra-prediction mode of the color difference component may be determined.

12. Configuration in Case of Executing Image Encoding Operation by Software

The image encoding apparatus may be realized as a computer executing the above-described series of processes by a program.

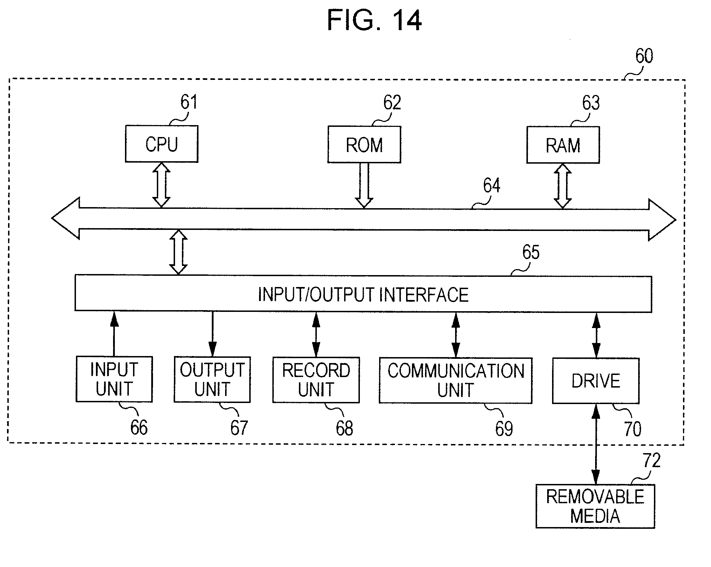

Fig. 14 is a diagram illustrating the configuration of a computer executing the above-described series of processes by a program. A CPU 61 of a computer 60 executes various processes in accordance with a computer program recorded in a ROM 62 and a recording unit 68.

The RAM 63 appropriately stores computer programs executed in the CPU 61 or data. The CPU 61, the ROM 62, and the RAM 63 are connected to each other via a bus 64.

An input/output interface 65 is connected to the CPU 61 via the bus 64. An input unit 66 such as a touch panel, a keyboard, a mouse, or a microphone and an output unit 67 such as a display are connected to the input/output interface 65. The CPU 61 executes various processes in accordance with instructions input from the input unit 66. The CPU 61 outputs the processing result to the output 67.

The recording unit 68 connected to the input/output interface 65 is a hard disk drive, for example, and records the computer programs executed in the CPU 61 and various kinds of data. The communication unit 69 carries out communication with an external apparatus via a network such as the Internet or a local area network or a wired or wireless communication path such as digital broadcast. The computer 60 acquires a computer program via the communication unit 69 and records the computer program in the ROM 62 or the recording unit 68.

When a removable media 72 such as a magnetic disk, an optical disk, a magnetooptical disk, or a semiconductor memory is mounted, a drive 70 drives the removable media to acquire a computer program, data, or the like recorded temporarily or permanently. The acquired computer program or data is transmitted to the ROM 62, the RAM 63, or the recording unit 68, as necessary.

The CPU 61 reads and executes the computer program executing the above-described series of processes to execute an encoding operation on an image signal recorded in the recording unit 68 or the removable media 72 or an image signal supplied via the communication unit 69.

The embodiment of the invention should not be construed as being limited to the embodiment set forth herein. The embodiment of the invention discloses an exemplary embodiment of the invention and may be modified or substituted in the scope of the invention without departing from the gist of the invention by those skilled in the art. That is, the gist of the invention is determined in consideration of the appended claims.

The present application contains subject matter related to that disclosed in Japanese Priority Patent Application JP 2009-097825 filed in the Japan Patent Office on April 14, 2009, the entire content of which is hereby incorporated by reference.

It should be understood by those skilled in the art that various modifications, combinations, sub-combinations and alterations may occur depending on design requirements and other factors insofar as they are within the scope of the appended claims or the equivalents thereof.

**Claims**

**1.** An image encoding apparatus comprising:

a luminance component intra-prediction unit which divides an encoding target image into first blocks of (M×M) pixels and determines an intra-prediction mode of a luminance component for each of encoding target blocks of the first block; and
a color difference component intra-prediction unit which calculates a weight of a prediction direction by using the intra-prediction mode of the luminance component in the first block and determines an intra-prediction mode of a color difference component of the first block from the weight of the prediction direction.

**2.** The image encoding apparatus according to claim 1, wherein the color difference component intra-prediction unit allocates the intra-prediction mode of the luminance component to a mode of each prediction direction and calculates the weight of the prediction direction from distribution of the allocated modes in the first block.

**3.** The image encoding apparatus according to claim 2, wherein the color difference component intra-prediction unit sets frequency of the mode of each prediction direction in the first block to the weight of the prediction direction.

**4.** The image encoding apparatus according to claim 3, wherein in the first block to a vertical weight, the color difference component intra-prediction unit
adds the weight corresponding to the number of continuous modes, of which the prediction direction is vertical, to a vertical weight and
adds the weight corresponding to the number of continuous modes, of which the prediction direction is horizontal, to a horizontal weight.

**5.** The image encoding apparatus according to claim 3 or 4, wherein in a region of the encoding target block located in an upper end of the first block to a vertical weight, the color difference component intra-prediction unit
sets frequency of modes, of which the prediction direction is vertical, to a vertical weight and
sets frequency of modes, of which the prediction direction is horizontal, in a region of the encoding target block located in a left end of the first block to a horizontal weight.

**6.** The image encoding apparatus according to claim 3, 4 or 5, wherein the color difference component intra-prediction unit
uses the number of continuous modes from the upper end of the first block as the number of vertically continuous modes, and
uses the number of continuous modes from the left end of the first block as the number of horizontally continuous modes.

**7.** The image encoding apparatus according to one of the claims 1 to 6, wherein the color difference component intra-prediction unit
sets Mode 0 (vertical), Mode 3 (diagonal down-left), Mode 5 (vertical-right), and Mode 7 (vertical-left) of the luminance component as a mode of which the prediction direction is vertical, and
sets Mode 1, Mode 6, and Mode 8 of the luminance component to a mode of which the prediction direction is horizontal.

**8.** The image encoding apparatus according to claim 7, wherein the color difference component intra-prediction unit sets Mode 2 (DC) and Mode 4 (diagonal down-right) of the luminance component as a mode corresponding to both the mode of which the prediction direction is vertical and the mode of which the prediction direction is horizontal.

**9.** The image encoding apparatus according to one of the claims 1 to 8,
wherein the luminance component intra-prediction unit calculates a value representing an encoding efficiency of each intra-prediction mode for each encoding target block to determine a mode with the smallest encoding efficiency as the intra-prediction mode of the luminance component, and
wherein the color difference component intra-prediction unit adds a weight indicated by the value representing the encoding efficiency to the weight of the prediction direction to determine the intra-prediction mode of the color difference component.

**10.** An image encoding method comprising the steps of:

dividing an encoding target image into first blocks of (M×M) pixels and to determine an intra-prediction mode of a luminance component for each of encoding target blocks of the first block by a luminance component intra-prediction unit; and
calculating a weight of a prediction direction by using the intra-prediction mode of the luminance component in the first block and to determine an intra-prediction mode of a color difference component of the first block from the weight of the prediction direction by a color difference component intra-prediction unit.

**11.** A computer program causing a computer to execute:

a function of dividing an encoding target image into first blocks of (M×M) pixels and determining an intra-prediction mode of a luminance component for each of encoding target blocks of the first block; and
a function of calculating a weight of a prediction direction by using the intra-prediction mode of the luminance component in the first block and determining an intra-prediction mode of a color difference component of the first block from the weight of the prediction direction.

# FIG. 1

EP 2 242 275 A1

# FIG. 2

EP 2 242 275 A1

FIG. 3

| M | A | B | C | D | E | F | G | H |
|---|---|---|---|---|---|---|---|---|
| I | a | b | c | d | | | | |
| J | e | f | g | h | | | | |
| K | i | j | k | l | | | | |
| L | m | n | o | p | | | | |

25

FIG. 4A

MODE 0
(VERTICAL)

FIG. 4B

MODE 1
(HORIZONTAL)

FIG. 4C

MODE 2
(DC)

FIG. 4D

MODE 3
(DIAGONAL DOWN-LEFT)

FIG. 4E

MODE 4
(DIAGONAL DOWN-RIGHT)

FIG. 4F

MODE 5
(VERTICAL-RIGHT)

FIG. 4G

MODE 6
(HORIZONTAL-DOWN)

FIG. 4H

MODE 7
(VERTICAL-LEFT)

FIG. 4I

MODE 8
(HORIZONTAL-UP)

EP 2 242 275 A1

# FIG. 5

```
        ( START )
            │
            ▼
┌─────────────────────────────────┐
│ READ PIXEL SIGNAL OF ORIGINAL IMAGE │──ST1
└─────────────────────────────────┘
            │
            ▼
┌─────────────────────────────────┐
│    READ PIXEL SIGNAL NECESSARY   │──ST2
│    FOR PREDICTION PREPARATION    │
└─────────────────────────────────┘
            │
            ▼
┌─────────────────────────────────┐
│     EACH INTRA-PREDICTION        │──ST3
│    MODE OF PREDICTION BLOCK      │
└─────────────────────────────────┘
            │
            ▼
┌─────────────────────────────────┐
│        PREPARE PREDICTION        │──ST4
└─────────────────────────────────┘
            │
            ▼
┌─────────────────────────────────┐
│      CALCULATE COST VALUE        │──ST5
└─────────────────────────────────┘
            │
            ▼
┌─────────────────────────────────┐
│                                  │──ST6
└─────────────────────────────────┘
            │
            ▼
┌─────────────────────────────────┐
│   DETERMINE MOST APPROPRIATE     │──ST7
│    INTRA-PREDICTION MODE         │
└─────────────────────────────────┘
            │
            ▼
        (  END  )
```

FIG. 6A

| 0 (2) | 1 (0) | 2 (0) | 3 (5) |
| 4 (8) | 5 (0) | 6 (2) | 7 (8) |
| 8 (4) | 9 (5) | 10 (8) | 11 (5) |
| 12 (1) | 13 (8) | 14 (8) | 15 (2) |

FIG. 6B

| 0 | 1 | 2 | 3 |
| 4 | 5 | 6 | 7 |
| 8 | 9 | 10 | 11 |
| 12 | 13 | 14 | 15 |

| V |
| H |
| DC |

FIG. 6C

MODE 2

# FIG. 7

```
                    START

              ┌────────────────────────┐  ST11
              │ ACQUIRE INTRA-PREDICTION MODE │
              └────────────────────────┘
                                            ST12
              ┌────────────────────────┐
              │      INITIALIZE WEIGHT       │
              └────────────────────────┘
                                            ST13
              ┌────────────────────────┐
              │    SET RANGE OF WEIGHT      │
              │  CALCULATION TARGET TO BLOCK │
              │  REGION OF ROW 1 OF UPPER END │
              └────────────────────────┘
                                            ST14
                   IS BLOCK OF          NO
                   MODE V PRESENT? ───────────►
                        │ YES
                                            ST15
              ┌────────────────────────┐
              │    ADD VERTICAL WEIGHT IN    │
              │      ACCORDANCE WITH        │
              │     FREQUENCY OF MODE V     │
              └────────────────────────┘
                                            ST16
                   IS RANGE OF          YES
              WEIGHT CALCULATION TARGET ────────►
                   LOWER END?
                        │ NO
                                            ST17
              ┌────────────────────────┐
              │    MOVE RANGE OF WEIGHT     │
              │  CALCULATION TARGET IN LOWER │
              │    DIRECTION BY ONE BLOCK    │
              └────────────────────────┘
                                            ST18
                        ARE
              NO    BLOCKS OF MODE V
              ◄──── CONTINUOUS IN VERTICAL
                       DIRECTION?
                        │ YES
                                            ST19
              ┌────────────────────────┐
              │ ADD WEIGHT IN VERTICAL DIRECTION │
              └────────────────────────┘


                                            ST20
              ┌────────────────────────┐
              │    SET RANGE OF WEIGHT      │
              │  CALCULATION TARGET TO BLOCK │
              │  REGION OF ONE ROW OF LEFT END │
              └────────────────────────┘
                                            ST21
                   IS BLOCK OF          NO
                   MODE H PRESENT? ───────────►
                        │ YES
                                            ST22
              ┌────────────────────────┐
              │   ADD HORIZONTAL WEIGHT IN   │
              │      ACCORDANCE WITH        │
              │     FREQUENCY OF MODE H     │
              └────────────────────────┘
                                            ST23
                   IS RANGE OF          YES
              WEIGHT CALCULATION ─────────────►
              TARGET PRESENT IN
                  RIGHT END?
                        │ NO
                                            ST24
              ┌────────────────────────┐
              │    MOVE RANGE OF WEIGHT     │
              │  CALCULATION TARGET IN RIGHT │
              │    DIRECTION BY ONE BLOCK    │
              └────────────────────────┘
                                            ST25
                        ARE
              NO    BLOCKS OF MODE H
              ◄──── CONTINUOUS IN HORIZONTAL
                       DIRECTION?
                        │ YES
                                            ST26
              ┌────────────────────────┐
              │     ADD HORIZONTAL WEIGHT     │
              └────────────────────────┘

                        END
```

# FIG. 8

```
              ┌─────────┐
              │  START  │
              └────┬────┘
                   │        ⌐ST31
         ┌─────────▼──────────┐
         │ SET THRESHOLD VALUE│
         └─────────┬──────────┘
                   │              ⌐ST32
             ╱─────▼──────╲
           ╱                ╲
         ╱  VERTICAL WEIGHT > ╲      YES
        ╱   THRESHOLD VALUE    ╲──────────────────────┐
        ╲         &            ╱                       │
         ╲ HORIZONTAL WEIGHT > ╱                       │
           ╲THRESHOLD VALUE? ╱                         │
             ╲──────┬──────╱                           │
                    │ NO                               │
                    │              ⌐ST34              │
              ╱─────▼──────╲                           │
            ╱  VERTICAL      ╲     YES                 │
           ╱   WEIGHT >       ╲───────────┐            │
           ╲ THRESHOLD VALUE? ╱           │            │
             ╲──────┬──────╱              │            │
                    │ NO                  │            │
                    │        ⌐ST36       │            │
              ╱─────▼──────╲              │            │
            ╱ HORIZONTAL     ╲   YES      │            │
           ╱  WEIGHT >        ╲──────┐    │            │
           ╲ THRESHOLD VALUE? ╱      │    │            │
             ╲──────┬──────╱         │    │            │
                    │ NO             │    │            │
              ⌐ST38 │        ⌐ST37  │ ⌐ST35      ⌐ST33
         ┌──────────▼┐  ┌────────▼┐ ┌───▼────┐ ┌───▼────┐
         │  MODE 0   │  │ MODE 1  │ │ MODE 2 │ │ MODE 0 │
         └──────┬────┘  └────┬────┘ └───┬────┘ └───┬────┘
                │            │          │          │
                │◄───────────┴──────────┴──────────┘
              ┌─▼──────┐
              │  END   │
              └────────┘
```

FIG. 9A

FIG. 9B

FIG. 10A

FIG. 10B

FIG. 11A

FIG. 11B

MODE 2

FIG. 12A

FIG. 12B

FIG. 13A

FIG. 13B

# FIG. 14

EP 2 242 275 A1

Europäisches
Patentamt

European
Patent Office

Office européen
des brevets

# EUROPEAN SEARCH REPORT

Application Number

EP 10 15 9213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | LI Z G ET AL: "Fast Mode Decision Algorithm for Intraprediction in H.264/AVC Video Coding" IEEE TRANSACTIONS ON CIRCUITS AND SYSTEMS FOR VIDEO TECHNOLOGY, IEEE SERVICE CENTER, PISCATAWAY, NJ, US LNKD-DOI:10.1109/TCSVT.2005.848356, vol. 15, no. 7, 1 July 2005 (2005-07-01), pages 813-822, XP011135306 ISSN: 1051-8215 * figures 2, 3, 4,5 * section II. "Overview of Intracoding in H.264/AVC" * page 814 * | 1-11 | INV. H04N7/26 H04N7/34 |
| Y | TANIZAWA A ET AL: "FAST RATE-DISTORTION OPTIMIZED CODING MODE DECISION FOR H.264" ELECTRONICS & COMMUNICATIONS IN JAPAN, PART III - FUNDAMENTALELECTRONIC SCIENCE, WILEY, HOBOKEN, NJ, US LNKD-DOI:10.1002/ECJC.20342, vol. 90, no. 9, 1 January 2007 (2007-01-01), pages 41-55, XP001542206 ISSN: 1042-0967 * figure 2 * * page 41, right-hand column, last paragraph * section 2. "Overview of Rate-Distortion Optimization" section 3.1 "Simple coding cost computation" section 4.3 "Accelerating 16-by-16 pixel block intra prediction mode decision" -----  -/-- | 1-11 | TECHNICAL FIELDS SEARCHED (IPC)  H04N |

The present search report has been drawn up for all claims

| Place of search | Date of completion of the search | Examiner |
|---|---|---|
| The Hague | 26 August 2010 | Stoufs, Maryse |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 
& : member of the same patent family, corresponding
    document

EPO FORM 1503 03.82 (P04C01)

Europäisches
Patentamt

European
Patent Office

Office européen
des brevets

# EUROPEAN SEARCH REPORT

Application Number

EP 10 15 9213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KIM: "Complexity Reduction of Chroma Intra Plane Mode" ITU STUDY GROUP 16 - VIDEO CODING EXPERTS GROUP -ISO/IEC MPEG & ITU-T VCEG(ISO/IEC JTC1/SC29/WG11 AND ITU-T SG16 Q6), XX, XX, no. JVT-E050, 18 October 2002 (2002-10-18), XP030005465 section 2. "Background and the proposed method", first paragraph * page 1 * | 1-11 | |
| A | Abderrahmane Elyousfi, Ahmed Tamtaoui, and EL Houssine Bouyakhf: "Fast Mode Decision Algorithm for Intra prediction in H.264/AVC Video Coding"[Online] vol. 7, no. 1, 1 January 2007 (2007-01-01), pages 356-364, XP002597544 International Journal of Computer Science and Network Security Retrieved from the Internet: URL:http://paper.ijcsns.org/07_book/200701 /200701B21.pdf> [retrieved on 2010-08-12] * abstract * section 3."Proposed Fast Intra Mode Decision" * figures 1,2,3, 5, 6; table 5 * -/-- | 1-11 | |

TECHNICAL FIELDS
SEARCHED      (IPC)

The present search report has been drawn up for all claims

| Place of search | Date of completion of the search | Examiner |
|---|---|---|
| The Hague | 26 August 2010 | Stoufs, Maryse |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**EUROPEAN SEARCH REPORT**

Application Number

EP 10 15 9213

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | XINGANG LIU ET AL: "MB Energy Trend-Based Intra Prediction Algorithm for MPEG-2 to H.264/AVC Transcoding" PARALLEL AND DISTRIBUTED PROCESSING WITH APPLICATIONS, 2008. ISPA '08. INTERNATIONAL SYMPOSIUM ON, IEEE, PISCATAWAY, NJ, USA, 10 December 2008 (2008-12-10), pages 510-515, XP031379603 ISBN: 978-0-7695-3471-8 * abstract * section 3 | 1-11 | |

----- 

TECHNICAL FIELDS
SEARCHED      (IPC)

The present search report has been drawn up for all claims

| Place of search | Date of completion of the search | Examiner |
|---|---|---|
| The Hague | 26 August 2010 | Stoufs, Maryse |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006005438 A
- JP 2009097825 A